# FASCICULE DE BREVET EUROPEEN

(11) **EP 2 331 641 B1**
(45) Date de publication et mention de la délivrance du brevet: **21.12.2016**
(21) Numéro de dépôt: 09755942.1
(22) Date de dépôt: 25.09.2009
(51) Int. Cl.: C09D 7/12

(54) **AGENT DE NEUTRALISATION POUR PEINTURES**
MITTEL ZUR NEUTRALISIERUNG FÜR LACKE
NEUTRALIZING AGENT FOR PAINTS

(30) Priorité: 30.09.2008 FR 0856623
(43) Date de publication de la demande: 15.06.2011
(73) Titulaire: Arkema France, 92700 Colombes (FR)
(72) Inventeur: VAN HEMELRYCK, Bruno, F-69630 Chaponost (FR); HIDALGO, Manuel, F-69530 Brignais (FR)
(74) Mandataire: Lhoste, Catherine
(86) Numéro de dépôt international: PCT/FR2009/051818
(87) Numéro de publication internationale: WO 2010/037953

(56) Documents cités:
- EP-A- 1 167 356

## Description

La présente invention concerne les peintures, qu'elles soient aqueuses ou solvantées.

Dans les peintures aqueuses, telles que les peintures utilisant des latex sur base acrylique, un ajustement de pH est généralement nécessaire afin de stabiliser le latex. Cet ajustement est appelé neutralisation. Par ailleurs, lorsque l'on dilue un concentré pigmentaire dans une peinture blanche ou base blanche, qu'elle soit aqueuse ou solvantée, il est également nécessaire de neutraliser (c'est-à-dire d'ajuster le pH de) ces concentrés pigmentaires.

Typiquement, le pH d'un latex est idéalement ajusté à une valeur comprise entre 8 et 10, de préférence entre 8,5 et 9,5. Cet ajustement est de préférence effectué à l'aide d'amines neutralisantes (amines d'ajustement) ajoutées dans une proportion de 0,1 à 0,5% en poids par rapport au poids de la peinture à neutraliser. Dans les concentrés pigmentaires, la quantité de neutralisant est, de préférence, maintenue au-dessous de 3,5% en poids.

Les premiers neutralisants utilisés étaient par exemple l'ammoniaque ou les hydroxydes alcalins, notamment l'hydroxyde de sodium.

Aujourd'hui, pour des raisons de volatilité du neutralisant ou de reprise d'eau par les films de peinture obtenus, on préfère utiliser d'autres neutralisants, notamment des amines, et en particulier le 2-amino-2-méthyl-1-propanol (CAS N°124-68-5), commercialisé sous la marque AMP^{®} à 90 ou 95% dans l'eau sous les noms AMP^{®} 90 et AMP^{®} 95 respectivement, par la société Angus.

Le 2-amino-2-méthyl-1-propanol présente ainsi une bonne action neutralisante. Toutefois les concentrés pigmentaires, les latex, et plus généralement les peintures neutralisées avec ce produit peuvent présenter des instabilités au stockage, avec dans certains cas l'apparition de synérèse (séparation de phases avec un exsudat liquide en surface), nécessitant une ré-homogénéisation mécanique avant emploi.

En outre, il a été constaté que les films de peintures, comprenant notamment latex et concentrés pigmentaires neutralisés à l'AMP^{®}, sont sensibles aux atmosphères humides, et les films laissent souvent apparaître des phénomènes de cloquage dans ces conditions, ce qui rend souvent délicate la seconde application d'une couche de peinture.

Par ailleurs, avec un point d'ébullition d'environ 165°C, cet amino-alcool est aujourd'hui considéré comme un composé organique volatil, au regard des législations en vigueur, notamment en Europe.

En effet, les réglementations en vigueur aujourd'hui imposent l'utilisation dans les peintures, les latex, et d'une manière générale dans tout type de revêtement filmogène durcissable, de composés dits « non-COV », c'est-à-dire ne comportant pas ou peu de Composés Organiques Volatils.

Cependant, les neutralisants non-COV qui sont étudiés aujourd'hui se sont montrés peu adaptés au cahier des charges des peintures. Ainsi, par exemple, la persistance de ces neutralisants dans les films provoque souvent une plastification inacceptable des peintures.

C'est pourquoi il est nécessaire de rechercher des alternatives aux agents neutralisants utilisés aujourd'hui, permettant de s'affranchir des inconvénients cités ci-dessus, tout en répondant aux exigences des réglementations en vigueur.

Ainsi, un premier objectif de l'invention est de proposer un agent de neutralisation, notamment pour peintures aqueuses ou solvantées ou pour concentrés pigmentaires pour la préparation desdites peintures.

Un autre objectif de la présente invention est de proposer un agent de neutralisation non-COV, notamment pour peintures aqueuses ou solvantées ou pour concentrés pigmentaires pour la préparation desdites peintures.

Selon encore un autre objectif, la présente invention propose un agent de neutralisation non-COV, permettant une bonne stabilité au stockage des peintures aqueuses ou solvantées ou concentrés pigmentaires.

D'autres objectifs apparaîtront dans la description de l'invention qui suit.

Ces objectifs sont atteints en partie ou en totalité, grâce aux travaux de recherches effectués par la Société déposante.

Ainsi, la présente invention a tout d'abord pour objet l'utilisation, comme agent de neutralisation et/ou comme modifiant rhéologique dans une formulation pour peinture, d'au moins un composé comprenant au moins un groupement neutralisant N et au moins un groupement associatif azoté A, reliés entre eux par au moins un, et de préférence un, groupement « espaceur » Sp.

Selon l'invention, ledit composé est choisi parmi la 1-(2-aminoéthyl)-imidazolidin-2-one (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole (3-ATA) et le 4-amino-1,2,4-triazole (4-ATA) et leurs mélanges, à une teneur comprise entre 0,05 et 5% en poids par rapport au poids total de la formulation.

Les composés utilisés selon l'invention appartiennent à une famille d'« agents neutralisants associatifs » ou plus simplement une famille de « neutralisants associatifs » qui est présentée dans la suite du présent exposé.

Le terme « formulation pour peinture » englobe tout type de formulation pour peinture, lasure, vernis, concentré pigmentaire, base blanche de peinture, et de manière générale tout type de formulation susceptible d'entrer dans la fabrication d'un revêtement aqueux ou solvanté, et nécessitant d'être neutralisé, plus précisément dont le pH nécessite d'être augmenté aux valeurs précédemment indiquées.

Dans les agents neutralisants associatifs, le groupement neutralisant peut être de tout type connu en soi, et de préférence un groupement amine, primaire, secondaire ou tertiaire. Ce groupement a pour fonction de neutraliser les éventuelles fonctions acides rencontrées dans les formulations pour peintures, aqueuses ou solvantées, de préférence aqueuses. Comme indiqué plus haut, par « neutraliser » on entend l'ajustement du pH à une valeur généralement supérieure à 8, de préférence comprise entre 8 et 10, de préférence entre 8,5 et 9,5.

Selon un aspect, le groupement neutralisant est représenté par -NH₂, -NHR¹ ou -NR¹R², où R¹ et R², identiques ou différents, représentent indépendamment l'un de l'autre un radical alkyle, linéaire, ramifié ou cyclique, comportant de 1 à 10, de préférence de 1 à 6, atomes de carbone, éventuellement substitué par un ou plusieurs substituants choisis parmi les groupements hydroxy (-OH) et thiol (-SH). De manière tout à fait préférée, le groupement neutralisant du neutralisant associatif est le groupement -NH₂, ou un groupement -NHR¹, où R¹ est tel que défini précédemment.

Le groupement « espaceur » permet de relier au moins un groupement neutralisant et/ou au moins un groupement associatif, et ainsi peut être de tout type connu en soi. Le groupement « espaceur » ne doit cependant pas, ou peu, interférer avec les groupements neutralisant et associatif du composé.

Ledit groupement « espaceur » est donc considéré comme un groupement inerte vis-à-vis du groupement neutralisant et du groupement « associatif ». Par « espaceur » inerte vis-à-vis du groupement neutralisant, on entend : qui ne présente pas de fonctions acides susceptibles de réagir avec le groupement neutralisant en le protonant. Par « espaceur » inerte vis-à-vis du groupement associatif, on entend : qui ne comprend pas de fonctions associatives telles que définies dans le présent exposé.

Le groupement « espaceur » est une chaîne hydrocarbonée, linéaire, ramifiée, cyclique, peut contenir un ou plusieurs radicaux aromatiques, et/ou un ou plusieurs hétéroatomes. Ladite chaîne peut éventuellement être substituée, pour autant que les substituants soient inertes vis-à-vis des groupements neutralisant et associatif.

Le groupement « espaceur » est de préférence une chaîne alkyle, linéaire ou ramifiée comportant de 1 à 6 atomes de carbone.

Par « groupement associatif » présent dans l'agent neutralisant associatif, on entend un groupement azoté susceptible de s'associer à un autre par l'intermédiaire d'interactions physiques non permanentes comme les interactions ioniques, les liaisons hydrogène, les interactions ions-dipôle, dipôle-dipôle.

Selon un aspect préféré, le groupement associatif azoté est un groupement susceptible de former une ou plusieurs liaison(s) hydrogène. De manière tout à fait préférée, le groupement associatif comprend au moins un enchaînement -C(Z)-N-, de préférence encore au moins un enchaînement -N-C(Z)-N-, et/ou au moins un enchaînement -N=CH-N-, inclus dans une chaîne ou un cycle, où Z représente l'oxygène, le soufre ou un groupement =NH. On préfère les enchaînements -N-C(Z)-N-, où Z représente l'oxygène.

Parmi les groupements associatifs comprenant au moins un enchaînement -C(Z)-N-, on peut citer, à titre d'exemples non limitatifs, les groupements éventuellement substitués suivants : urée, bis-urée, amide, amido-pyridine, uréido-pyrimidinone, urazole, triazolidine-dione, uracile, et imidazolidone.

D'autres groupements associatifs pouvant être compris dans le neutralisant associatif sont ceux comportant des imines cycliques (-C=N-), tels que les triazolines, et plus généralement comportant les motifs (A1) et (A2) suivants :

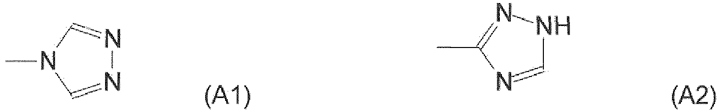

Dans un autre aspect préféré, le groupement associatif comprend au moins un hétérocycle azoté, généralement à 5 ou 6 chaînons, comprenant 1, 2, 3 ou 4 atomes d'azote dans le cycle, de préférence deux atomes d'azote dans le cycle. Des exemples de groupements associatifs selon cet aspect préféré sont les groupes imidazolidinyle, triazolyle, triazinyle, bis-uréyle, uréido-pyrimidyle. Le groupe imidazolidinyle est préféré.

Selon encore un autre aspect préféré, le groupement associatif comprend au moins un motif (A3) à (A7) suivant : 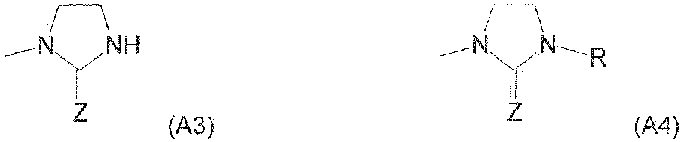 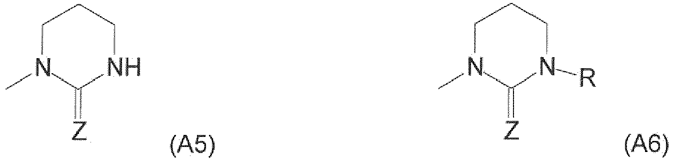 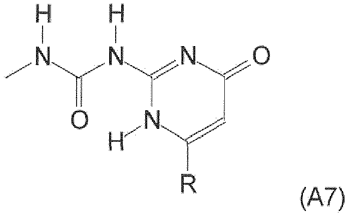 où R représente un substituant, par exemple un radical alkyle linéaire ou ramifié comportant de 1 à 10 atomes de carbone et Z est tel que défini précédemment représente un atome d'oxygène ou de soufre ou un groupement =NH, de préférence un atome d'oxygène.

Selon un mode de réalisation, le neutralisant associatif, et en particulier le composé utilisé selon l'invention, présente une, de préférence deux, et de préférence encore toutes les caractéristiques suivantes :
- pKa (constante de dissociation de l'amine protonée mesurée à 25°C) égal ou supérieur à 8,5, de préférence égal ou supérieur à 9, ne dépassant pas 12, de préférence ne dépassant pas11 ;
- soluble en proportions allant de 10 g à 1000 g d'amine, de préférence de 10 g à 500 g d'amine, de préférence encore de 10 g à 100 g d'amine, pour 100 g de solvant polaire, de préférence l'eau et/ou les alcools. ;
- point d'ébullition supérieur à 250°C, de préférence supérieur à 300°C, de préférence encore supérieur à 320°C, sous pression atmosphérique.

Les agents neutralisants associatifs comportant un groupement neutralisant, un groupement « espaceur » et un groupement associatif peuvent par exemple être représentés par la formule (1a) suivante :

N-Sp-A (1a).

Les agents neutralisants associatifs comportant un groupement neutralisant, un groupement « espaceur » et deux groupements associatifs peuvent par exemple être représentés par la formule (1 b) suivante :

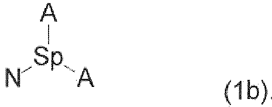

De manière similaire, les agents neutralisants associatifs comportant deux groupements neutralisants, un groupement « espaceur » et un groupement associatif peuvent par exemple être représentés par la formule (1 c) suivante :

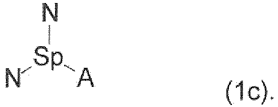

Selon le même principe, les agents neutralisants associatifs comportant deux groupements neutralisants, un groupement « espaceur » et deux groupements associatifs peuvent par exemple être représentés par la formule (1 d) suivante :

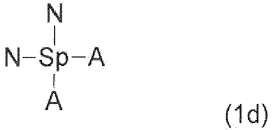

D'autres agents neutralisants associatifs peuvent également être représentés par les formules (1e) à (1l) suivantes : 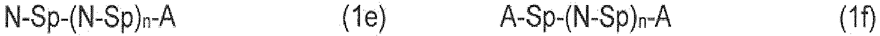 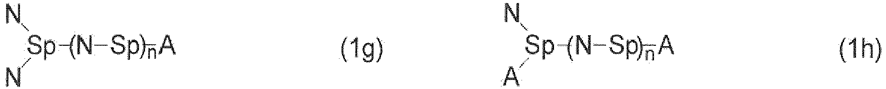 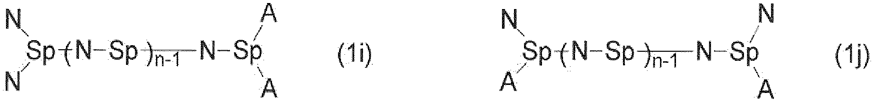 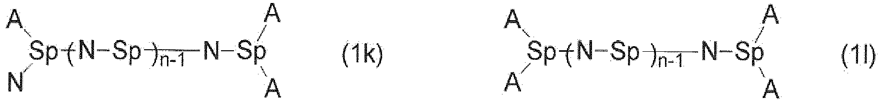 où n représente 1, 2 ou 3.

Il doit être entendu que, dans les agents neutralisants associatifs, et notamment de formules (1a) à (1l), si plus d'un groupement neutralisant est présent, ils peuvent être identiques ou différents. De même, si plus d'un groupement associatif est présent, ils peuvent être identiques ou différentes. Enfin, si plus d'un groupement « espaceur » est présent, ils peuvent être identiques ou différents.

De manière générale, et non limitative, les agents neutralisants associatifs comportent de préférence au maximum 4 groupements neutralisants et/ou au maximum 4 groupements associatifs. Les groupements « espaceurs » sont au nombre de 1, 2 ou 3, de préférence 1.

Selon un aspect préféré, l'agent neutralisant associatif répond à la formule (1a) exposée ci-dessus.

Des exemples préférés d'agents neutralisants associatifs sont ceux comprenant :
- un groupement neutralisant, de préférence une amine primaire, secondaire ou tertiaire, de préférence une amine primaire,
- un groupement espaceur, de préférence une chaîne hydrocarbonée comportant de 1 à 6 atomes de carbone, de préférence de 2 à 4 atomes de carbone, et
- un groupement associatif de formules (A1) à (A7) définies ci-dessus.

Ainsi, les agents neutralisants associatifs utilisés dans le cadre de la présente invention sont la 1-(2-aminoéthyl)-imidazolidin-2-one (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole (3-ATA) et le 4-amino-1,2,4-triazole (4-ATA) et leurs mélanges. L'UDETA est préférée pour une utilisation dans la présente invention.

Ces agents neutralisants associatifs sont soit disponibles dans le commerce, soit connus, soit encore obtenus selon des procédés de synthèse connus de l'homme du métier, directement ou par adaptations simples, et qui sont décrits dans la littérature scientifique, la littérature brevets, les « Chemical Abstracts », ou par les bases de données en ligne ou encore l'Internet.

À titre d'exemple, l'UDETA, l'UTETA et l'UTEPA peuvent être préparées en faisant réagir de l'urée sur la diéthylène triamine (DETA), la triéthylène tétramine (TETA) et la tétraéthylène pentamine (TEPA) respectivement.

Un neutralisant associatif tout particulièrement préféré pour l'utilisation objet de la présente invention est l'UDETA.

En effet, l'UDETA est une amine non-COV (point d'ébullition > 300°C), très soluble dans l'eau et aussi dans de nombreux solvants organiques comme les alcools et les polyols, qui peut être utilisée avantageusement dans les formulations pour peintures, notamment les peintures aqueuses, comme agent d'ajustement de pH en remplacement des agents neutralisants classiques tels que les amines ou alcanol-amines employées habituellement.

Il a été découvert de manière surprenante que les composés utilisés comme neutralisants associatifs selon l'invention confèrent aux diverses formulations neutralisées (concentrés pigmentaires, bases blanches, peintures et autres revêtements, par exemple lasures) des propriétés rhéologiques tout à fait intéressantes, notamment en matière de viscosité : il a été observé que ces composés utilisés dans l'invention permettent d'augmenter la viscosité des formulations.

Ainsi, les composés utilisés dans l'invention comme agents de neutralisation peuvent également être avantageusement utilisés, non seulement en tant que neutralisants, mais aussi en tant que co-épaississants, voire épaississants.

La stabilité dans le temps conférée aux formulations pour peintures neutralisées par un composé selon l'invention, notamment l'UDETA, est supérieure à celle apportée par exemple par l'amino-2-méthyl-1-propanol (AMP^{®} de la société Angus) considéré aujourd'hui comme l'un des meilleurs agents de neutralisation pour peintures aqueuses acryliques, mais classé COV.

Cette performance de stabilité a été observée après 7 mois, où l'on a pu constater un pH stable, une bonne stabilité de la dispersion du pigment (TiO₂) et de la charge opacifiante carbonate de calcium, par l'absence de synérèse, une faible évolution de la viscosité (après agitation). L'ajout d'un composé selon l'invention à une formulation de peinture aqueuse satinée a également apporté une bien moindre sensibilité à l'eau du film séché par rapport à la même formulation neutralisée par l'AMP^{®}.

En outre, la composante associative des composés utilisés dans la présente invention apporte une performance tout à fait intéressante en terme de renforcement rhéologique qui se traduit par une viscosité plus élevée qu'avec AMP^{®}. Une conséquence directe en est la diminution possible de la quantité d'agent épaississant habituellement ajouté à la formulation de peinture, ainsi qu'une meilleure applicabilité sur tous types de supports et en particulier une meilleure applicabilité verticale et sur supports métalliques, performances très recherchée pour les peintures industrielles.

Par ailleurs le composé non-COV de la présente invention n'entraîne pas de plastification du film de peinture dans laquelle il a été utilisé. Ceci a été notamment mis en évidence par une absence d'aspect collant ou un faible effet collant d'un film séché, tout à fait comparable à ceux observés avec des films obtenus à partir de peintures neutralisées avec les neutralisants classiquement utilisés. Cette plastification limitée peut être évaluée aussi par un test de dureté du film séché. Un film séché de peinture satinée présente la même dureté à 20°C lorsque le neutralisant est un composé selon l'invention par rapport aux amines neutralisantes classiques.

Il a été découvert de manière surprenante que les composés selon l'invention confèrent aux diverses formulations neutralisées (concentrés pigmentaires, bases blanches, peintures, notamment pour encres et vernis et autres formulations nécessitant la dispersion de charges ou pigments dans une matrice) des propriétés de codispersant : il a été observé que les composés utilisés dans l'invention permettent d'augmenter la dispersion de charges ou de pigments lorsqu'il sont utilisés en combinaison avec des polymères amphiphiles.

Ainsi, et selon un autre aspect de l'invention, les composés de l'invention peuvent également être avantageusement utilisés, comme agents co-dispersants.

Les agents dispersants utilisés en combinaison avec les composés de l'invention sont de préférence des polymères amphiphiles qui peuvent être des polymères ou des copolymères issus de la polymérisation radicalaire de monomères éthyléniques insaturés hydrophobes et hydrophiles comme le styrène et ses dérivés, l'acide acrylique et ses esters et amides, l'acide méthacrylique et ses esters et amides, et incluant, au moins, une partie de groupes acides neutralisables par le composé utilisé comme agent de neutralisation associatif de l'invention. Ces polymères amphiphiles peuvent être préparés par des techniques de polymérisation radicalaire classique ou contrôlée.

Les composés utilisés dans le cadre de la présente invention peuvent également être utilisés avec d'autres neutralisants couramment utilisés dans le domaine. En outre des mélanges, en toutes proportions, de deux ou plusieurs composés selon l'invention peuvent être utilisés dans une même formulation pour peinture.

Comme indiqué précédemment, la présente invention concerne l'utilisation, comme agent de neutralisation et/ou comme modifiant rhéologique dans une formulation pour peinture, d'au moins un composé choisi parmi une liste de neutralisants associatifs tels que définis ci-dessus, à une teneur comprise entre 0,05 et 5% en poids, de façon préférée entre 0,05 et 2% en poids par rapport au poids total de la formulation.

La formulation pour peinture peut être mise en oeuvre de manière connue de l'homme du métier pour la fabrication de peinture aqueuse, telle qu'une peinture latex sur une base acrylique, ladite base acrylique pouvant être par exemple un latex styrène-acrylique, un latex vinyl-acrylique ou un latex tout acrylique, ou encore une peinture solvantée, telle qu'une peinture alkyde ou glycérophtalique.

Ainsi, un autre aspect de la présente invention concerne une formulation pour peinture, notamment pour peinture aqueuse ou solvantée et/ou concentré pigmentaire, comprenant au moins un composé choisi parmi la 1-(2-aminoéthyl)-imidazolidin-2-one (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole (3-ATA) et le 4-amino-1,2,4-triazole (4-ATA) et leurs mélanges. De préférence, la formulation pour peinture comprend de la 1-(2-aminoéthyl)-imidazolidin-2-one (UDETA).

Les peintures aqueuses ou solvantées, teintées ou non, selon la présente invention trouvent une utilisation tout particulièrement avantageuse comme produits de revêtement de surfaces, de murs et autres surfaces architecturales, qu'elles soient intérieures ou extérieures.

Avantageusement, la formulation pour peinture selon l'invention contient de 0,05 à 5% en poids, de façon préférée de 0,05 à 2% en poids, plus préférentiellement de 0,1 à 0,5% en poids, et de façon encore plus préférée de 0,1 à 0,3% en poids dudit composé, par rapport au poids total de la formulation.

Avantageusement, la formulation pour peinture selon l'invention est une base blanche, un concentré pigmentaire ou une peinture teintée.

Le (ou les) composé(s) utilisé(s) selon l'invention peu(ven)t être le(s) seul(s) agent(s) de neutralisation de la formulation pour peinture ou encore la peinture peut comprendre au moins un autre agent de neutralisation choisi parmi ceux habituellement utilisés et connus de l'homme du métier, et notamment parmi l'ammoniaque, l'hydroxyde de sodium, la diméthylamine, la monoéthanolamine, la diéthanolamine, la N-méthyléthanolamine, le 2-amino-2-méthyl-1-propanol, le *sec*-butylamino-éthanol et le 2-n-butylaminoéthanol.

De préférence, le (ou les) composé(s) représente(nt) au moins 1% du mélange d'agents de neutralisation, de façon encore davantage préférée au moins 50% en poids du mélange des agents de neutralisation.

La présente invention a également pour objet une peinture teintée, caractérisée par le fait qu'elle a été obtenue par dilution d'un concentré pigmentaire (CP1) comprenant pour 100 parties en poids :
- de 1 à 4 parties en poids d'au moins un neutralisant associatif tel que défini ci-dessus ;
- de 1 à 4 parties en poids d'au moins un agent dispersant ;
- de 0 à 4 parties en poids d'au moins un agent épaississant ;
- de 20 à 50 parties en poids d'au moins un pigment ou colorant ;
- de 40 à 70 parties en poids d'eau ;
- de 1 à 10 parties en poids d'un retardateur de séchage, tel que le polyéthylène glycol 200 ; et
- de 0,1 à 0,8 parties en poids des additifs et adjuvants usuels, tels qu'anti-mousse et biocide ;
dans une base de peinture aqueuse blanche mate (PM1) comprenant pour 1000 parties en poids :
- de 80 à 150 parties en poids d'eau d'ajout ;
- de 1 à 2 parties en poids d'au moins un agent dispersant ;
- de 1 à 3 parties en poids d'au moins un agent de neutralisation, tel que mais non nécessairement un neutralisant associatif tel que défini ci-dessus ;
- de 80 à 150 parties en poids de pigment blanc, par exemple le dioxyde de titane (TiO₂) ;
- de 400 à 550 parties en poids d'au moins un autre pigment blanc ;
- de 100 à 200 parties en poids d'au moins un liant tel qu'une émulsion acrylique, une résine acrylique ;
- de 150 à 250 parties en poids d'au moins un épaississant tel qu'un éther cellulosique ; et
- de 2 à 5 parties en poids des additifs et adjuvants usuels, tels qu'anti-mousse, agent de coalescence et biocide.

Selon un autre aspect, la présente invention a également pour objet une peinture teintée, caractérisée par le fait qu'elle a été obtenue par dilution du concentré pigmentaire (CP1) défini plus haut dans une peinture aqueuse blanche satinée (PS1) comprenant pour 1000 parties en poids :
- de 70 à 150 parties en poids d'eau d'ajout ;
- de 1 à 3 parties en poids d'au moins un agent dispersant ;
- de 1 à 3 parties en poids d'au moins un agent de neutralisation, tel que mais non nécessairement un neutralisant associatif tel que défini ci-dessus ;
- de 80 à 300 parties en poids de pigment blanc, par exemple le dioxyde de titane (TiO₂) ;
- de 40 à 90 parties en poids d'au moins un autre pigment blanc ;
- de 400 à 550 parties en poids d'au moins un liant tel qu'une émulsion acrylique, une résine acrylique ;
- de 1 à 20 parties en poids d'au moins un épaississant; et
- de 10 à 40 parties en poids des additifs et adjuvants usuels, tels qu'anti-mousse, agent de coalescence et biocide.

Selon encore un autre aspect, la présente invention a également pour objet une peinture teintée, caractérisée par le fait qu'elle a été obtenue par dilution du concentré pigmentaire (CP1) défini plus haut dans une peinture aqueuse blanche pour façade (PF1) comprenant pour 1000 parties en poids :
- de 80 à 150 parties en poids d'eau d'ajout ;
- de 200 à 250 parties en poids d'au moins un liant tel qu'une résine acrylique ;
- de 1 à 3 parties en poids d'au moins un agent dispersant ;
- de 1 à 3 parties en poids d'au moins un agent de neutralisation, tel que mais non nécessairement un neutralisant associatif tel que défini précédemment ;
- de 160 à 250 parties en poids de pigment blanc, par exemple le dioxyde de titane (TiO₂) ;
- de 300 à 400 parties en poids d'au moins un autre pigment blanc ;
- de 120 à 200 parties en poids d'au moins un épaississant tel qu'un éther cellulosique ; et
- de 2 à 5 parties en poids des additifs et adjuvants usuels, tels qu'anti-mousse et biocide.

Selon encore un autre aspect, la présente invention a également pour objet une peinture teintée, caractérisée par le fait qu'elle a été obtenue par dilution du concentré pigmentaire (CP1) défini plus haut dans une base de peinture solvantée blanche (PSolv), comprenant pour 1000 parties en poids :
- de 500 à 650 parties en poids d'une résine alkyde ;
- de 230 à 350 parties en poids d'au moins un pigment blanc ;
- de 4 à 8 parties en poids d'au moins un agent mouillant ;
- de 15 à 25 parties en poids d'au moins un siccatif ;
- de 6 à 10 parties en poids des additifs et adjuvants usuels, tels qu'agents anti-sédimentation et agents anti-peau ; et
- de 80 à 120 parties en poids d'un solvant hydrocarbure, tel que par exemple le white-spirit.

Dans chacune des peintures décrites ci-dessus, le concentré pigmentaire représente généralement entre 0,1 et 8% en poids de la peinture résultante.

La présente invention a également pour objet un concentré pigmentaire comprenant au moins un agent neutralisant associatif tel que défini plus haut. Le concentré pigmentaire de l'invention comprend en outre généralement un dispersant primaire, un ou plusieurs pigments, de l'eau et un ou plusieurs additifs et adjuvants usuels.

Le concentré pigmentaire de l'invention peut avantageusement être destiné à teinter une base de peinture blanche, aqueuse ou solvantée.

Le concentré pigmentaire peut également comprendre un ou plusieurs autres agents de neutralisation, notamment choisi(s) parmi ceux habituellement utilisés et connus de l'homme du métier, et notamment ceux choisis parmi l'ammoniaque, l'hydroxyde de sodium, la diméthylamine, la monoéthanolamine, la diéthanolamine, la N-méthyléthanolamine, le 2-amino-2-méthyl-1-propanol, le sec-butylamino-éthanol et le 2-n-butylaminoéthanol.

Ledit concentré pigmentaire peut avantageusement comprendre de 0,05 à 10% en poids d'au moins un neutralisant associatif, et, lorsqu'il(s) est(sont) utilisé(s) en mélange avec au moins un autre agent de neutralisation, il(s) représente(nt) avantageusement au moins 1% en poids, de préférence au moins 50% en poids dudit mélange (totalité des agents de neutralisation).

Les diverses formulations pour peintures, bases blanches, concentrés pigmentaires et autres, évoqués précédemment, peuvent contenir, outre au moins un neutralisant associatif selon l'invention, un ou plusieurs dispersants universels, tels que oligomères PU modifiés hydrophiles (ex. Borchi® Gen 0451, Borchi® Gen SN 95).

Il a été observé de manière tout à fait surprenante que le neutralisant associatif utilisé pour neutraliser un concentré pigmentaire, une peinture aqueuse ou solvantée, et plus généralement toute formulation de revêtement devant être neutralisée, se comporte en outre comme un modifiant rhéologique : en effet le neutralisant associatif présente des propriétés de co-épaississant, voire d'épaississant, mais également des propriétés d'agent co-thixotrope, voire d'agent thixotrope.

Les exemples suivants illustrent la présente invention sans toutefois en limiter la portée. Dans ces exemples, les parties et les pourcentages sont en poids, sauf indication contraire.

### Exemple 1 : Concentrés pigmentaires, type CP1

**-- Tableau 1 --**

| **CONCENTRÉ PIGMENTAIRE** | **CPu** | **CPam** |
|---|---|---|
| *Composant* | *Quantité (g)* | *Quantité (g)* |
| Coadix^{®} 123 K (Dispersant primaire) (Coatex) | 2,1 | 2,1 |
| UDETA (Neutralisant associatif) | 2,1 | - |
| AMP^{®} 95 (Neutralisant) | - | 2,1 |
| Bleu Irgalite^{®} PG (Pigment)(B.A.S.F.) | 27,98 | 27,98 |
| BYK 038 (Anti mousse) (Byk Chemie) | 0,35 | 0,35 |
| Acticide MBS (Biocide) (Thor) | 0,07 | 0,07 |
| Eau | 62,97 | 62,97 |
| Coapur^{®} 6050 (Épaississant PU) (Coatex) | 1,6 | 1,6 |
| PEG 200 (Polyethylènèglycol) | 2,83 | 2,83 |
| **Total** | 100 | 100 |

Pour préparer chacun de ces concentrés pigmentaires, on a réalisé le broyage du pigment dans un broyeur à billes de diamètre 1,5 mm, en présence de l'eau, du dispersant primaire, de l'agent neutralisant, de l'anti-mousse, à 1000 tours/minute pendant 1h30. La taille des particules est contrôlée à l'aide d'une jauge North et choisie à 20 µm.

Le biocide, le retardateur de séchage PEG200 et l'épaississant sont ajoutés à la fin du temps de broyage. Les concentrés ont été comparés par leur viscosité Brookfield (Mobile 2) à 50 et 100 tr/min après un temps de repos de 24 heures pour chaque formulation. Les résultats sont présentés dans le tableau 2 suivant :

**-- Tableau 2 --**

| | ***Viscosité Brookfield (cP)*** | |
|---|---|---|
| | 50 tr/min | 100 tr/min |
| CPam | 47 | 45 |
| CPu | 154 | 118 |

Cet exemple montre qu'un concentré pigmentaire comprenant un neutralisant associatif selon l'invention présente une viscosité supérieure, pour un cisaillement donné, à celle d'un concentré pigmentaire préparé avec AMP®95.

En outre, une forte sédimentation apparaît dans CPam dès 48 heures, ce qui nécessite au bout d'une semaine, une re-dispersion mécanique. En revanche, le CPu ne montre qu'une très légère sédimentation au bout d'une semaine de stockage, et la remise en dispersion est aisément réalisée à la main.

### Exemple 2 : Bases blanches aqueuses satinées, type PS1

Deux bases blanches BBu et BBam sont préparées en mélangeant les divers constituants présentés dans le Tableau 2 ci-dessous, dans les proportions indiquées (en poids), selon les techniques connues de l'homme du métier pour la formulation des latex.

On mélange tout d'abord l'eau, l'anti-mousse, le dispersant, l'agent neutralisant et l'anti-bactérien à 500 tours/min à l'aide d'un disperseur pendant 5 minutes. Le mélange obtenu est fluide.

On réalise ensuite « l'empattage » (étape dans laquelle sont introduites les charges), en introduisant dans le mélange obtenu précédemment les pigments et modificateurs de rhéologie et de brillance (dioxyde de titane, carbonate de calcium et talc), sous agitation à 800 tours/min, pendant 20 minutes. L'introduction des charges est réalisée lentement, et il est souvent observé un échauffement du mélange en raison des forces de cisaillement.

L'agitation est ensuite réduite à 500 tours/min pour ajouter la résine et l'agent de coalescence. La viscosité est alors éventuellement réglée par ajout d'un épaississant (type PU, cellulosique, ou polyéther-polyol).

**-- Tableau 2 --**

| **Préparation des bases blanches, type PS1 : BBu et BBam** | | | |
|---|---|---|---|
| | **Base blanche pour peinture satinée intérieure** | **BBu** | **BBam** |
| **5 minutes à 500 tr/min** | Eau | 90,6 | 90,6 |
| | Tego^{®} 7447(Antimouse) | 2,3 | 2,3 |
| | COATEX P 90 (Dispersant) | 2,8 | 2,8 |
| | UDETA (Amine)) | 2,8 | - |
| | AMP^{®} 90 | - | 2,8 |
| | Acticide MBS (Biocide) | 1,1 | 1,1 |
| | | | |
| **20 minutes** | R-HD2 (Oxyde de titane) | 283 | 283 |
| | | | |
| **à 800 tr/min** | MIKHART 2 (Carbonate de calcium) | 79,2 | 79,2 |
| | | | |
| **5 minutes à 500 tr/min** | Craymul^{®} 2421 (Cray Valley) (Dispersion aqueuse de copolymère styrène-acrylique) | 501,8 | 501,8 |
| | Texanol^{®} (Solvant de coalescence) | 17 | 17 |
| | Rhéolate^{®} 310 (50%) (épaississant à base de polyether-polyol) | 1,9 | 1,9 |
| | Eau | 17,5 | 17,5 |
| **Total** | | 1000 | 1000 |

Les bases blanches ci-dessus ont été comparées selon leur pH initial et leur viscosité initiale (après un repos de 24 heures après formulation) et leur évolution en pH et viscosité au stockage à l'ambiante plusieurs mois. Les viscosités Brookfield ont été mesurées avec un Mobile 6, à 10 et 100 tr/min.

Les résultats sont présentés dans le tableau 3 ci-dessous.

**-- Tableau 3 --**

| **Stabilité au stockage à température ambiante des bases blanches** | | | | |
|---|---|---|---|---|
| | ***BBu*** | | ***BBam*** | |
| | Valeur initiale | **Après 7 mois** | Valeur initiale | **Après 7 mois** |
| PH : | 8,62 +/- 0,3 | **8,53** | 8,91 +/- 0,3 | **8,64** |
| Viscosité (cP) : | | | | |
| à 10 tr/min : | 12700 | **18500** | 7700 | **9900** |
| à 100 tr/min : | 4020 | **4930** | 2420 | **3140** |
| Observations : | Peinture onctueuse | **Bonne stabilité, peinture onctueuse** | Peinture fluide | **Synérèse** |

Les mesures de pH et de viscosité (Brookfield, Mobile 6, 10 et 100 tours/min, température ambiante) sont prises au moins 24h après la formulation, l'épaississant pouvant agir encore pendant quelque temps après la fin de la formulation. Les valeurs de pH sont équivalentes pour les 2 formulations, et sont comprises entre 8,6 et 8,9.

Après stockage (7 mois à l'ambiante), le pH a peu diminué pour chacune des formulations, cependant la peinture formulée avec AMP présente une forte synérèse (pas de stabilité au stockage).

Au contraire la formulation neutralisée à l'aide d'un agent neutralisant associatif selon l'invention (UDETA) présente à la fois une excellente stabilité dans le temps ainsi qu'une viscosité élevée, confirmant ainsi la propriété de modifiant rhéologique des neutralisants de la présente invention.

Cet exemple montre à nouveau l'importante différence de viscosité observée selon l'emploi d'un agent neutralisant classique ou d'un agent neutralisant associatif selon l'invention : un agent neutralisant associatif selon l'invention induit une viscosité plus importante de la peinture fraîchement formulée par rapport à une peinture neutralisée à l'aide d'un agent de neutralisation classique.

Après 7 mois de stockage à température ambiante, cette différence de viscosité persiste. Par ailleurs la peinture blanche formulée avec un neutralisant associatif de l'invention reste onctueuse à l'ouverture du pot après 7 mois de stockage tandis que celle neutralisée à l'aide d'un neutralisant classique présente une synérèse importante qui nécessite une re-dispersion mécanique (viscosité mesurée après re-dispersion).

### Exemple 3 : Test de reprise d'eau

Les peintures blanches BBu et BBam décrites ci-dessus ont été appliquées en film de 100 µm sur plaque de verre et laissées sécher pendant 48 heures. Sont déposées ensuite 20 gouttes d'eau (d'environ 50 µL chacune) au milieu de chaque surface peinte avec BBu et BBam.

Une boîte de Petri ou un verre de montre de diamètre 5 cm est ensuite placé au-dessus de la zone ainsi humidifiée de façon que la boîte ou le verre de montre constitue un couvercle. Le test consiste à observer et compter les cloques consécutives à la reprise d'eau en fonction du temps, avec une observation à la loupe au travers du couvercle en verre toutes les 5 minutes.

Les résultats de reprise d'eau avec BBu et BBam sont rassemblés dans le tableau 4 suivant :

**-- Tableau 4 : Tests de reprise d'eau --**

| ***Base blanche*** | ***BBu*** | ***BBam*** |
|---|---|---|
| *Cloquage* | Petites cloques au bout de 5h30 ; après 7 heures, 20% de la surface sous couvercle est cloquée. | Petites cloques au bout de 1 h45 ; après 7 heures, 90% de la surface sous couvercle est cloquée. |

Cet exemple illustre le caractère hydrophobant que procure l'agent neutralisant associatif de l'invention à la base blanche, par rapport à un agent neutralisant classique.

### Exemple 4 : Test de « blocking »

Afin d'évaluer l'éventuelle plastification après séchage d'un film de peinture neutralisée selon l'invention, plastification qui pourrait résulter d'un long temps de résidence dans le film du neutralisant associatif selon l'invention, en raison de son point d'ébullition élevé, un test dit de blocking, proche de la méthode ASTM D 4946, a été réalisé en comparatif sur BBu et BBam.

On applique les peintures (base blanche BBu ou BBam) décrites précédemment avec une épaisseur de 100 µm sur deux cartes de contraste Leneta®. Après 48 heures de séchage à température ambiante, on appose les deux cartes, faces peintes, l'une contre l'autre. Sur l'ensemble, on superpose une plaque de verre, sur laquelle on place une masse de un kilogramme.

On laisse sécher 24 heures, à température ambiante, avant d'enlever le poids et la plaque de verre. On sépare doucement, à la main, les deux cartes Leneta®. Le test consiste à observer visuellement les zones d'arrachement du film déposé sur chacune des cartes.

On observe que le neutralisant associatif selon l'invention utilisé dans la base blanche BBu ne génère pas plus de zones d'arrachement que le neutralisant de référence (AMP® 90). Ceci indique que le neutralisant associatif selon l'invention, bien que de point d'ébullition élevé (supérieur à 300°C), ne présente pas un caractère plastifiant plus important que les neutralisants de référence qui sont considérés comme COV (point d'ébullition de l'AMP® : environ 165°C).

### Exemple 5 : Test de dureté Persoz

On sait qu'une plastification d'un film de peinture séché se traduit également par une dureté plus faible que pour la peinture qui n'a pas été additivée avec l'agent responsable de cette plastification. Par conséquent, une mesure de la dureté Persoz selon la norme BS3900:e5:1973, DIN 53157 et ISO 152 peut être effectuée pour vérifier l'absence de plastification notable lorsqu'un neutralisant associatif selon l'invention est incorporé dans une peinture.

On réalise un test de dureté Persoz selon la norme précitée sur des films séchés de bases blanches BBu et BBam. On constate que la dureté Persoz du film de peinture réalisée avec le neutralisant associatif selon l'invention est du même ordre de grandeur (soit une dureté Persoz d'environ 78) que celle obtenue avec le neutralisant de référence AMP®.

Ceci confirme également le caractère non plastifiant du neutralisant selon l'invention.

### Exemple 6 : Effet co-dispersant sur un concentré pigmentaire

Une poudre d'un copolymère amphiphile à base de styrène, α-méthyl styrène et acide acrylique tel que le Joncryl 678^{®} commercialisé par la société BASF est dispersé dans un bêcher sous agitation magnétique, à 10% en poids dans de l'eau déminéralisée. L'agent neutralisant aminoéthyl imidazolidone (UDETA) de pureté 95% en poids est préalablement dilué à 20% en poids dans l'eau et ajouté lentement (goutte à goutte) au bêcher. Le pH de la dispersion est suivi à l'aide d'un pH-mètre de marque WTW de référence pH 538 et d'une électrode en verre. La neutralisation est considérée comme terminée lorsque la dispersion devient une solution transparente ou translucide stable à l'arrêt de l'agitation et que le pH n'évolue plus et se situe dans une valeur comprise entre 8,5 et 10,5. A titre de référence, une solution du même copolymère est préparée de la même façon en neutralisant la dispersion du polymère à 10% dans de l'eau déminéralisée par un ajout progressif d'une solution de soude à 10% en poids. Dans ce cas la neutralisation est considérée comme terminée lorsque la dispersion devient une solution transparente ou translucide stable à l'arrêt de l'agitation et que le pH n'évolue plus et atteint une valeur supérieure à 11.

Un concentré pigmentaire est préparé à l'aide de ce dispersant neutralisé par l'agent neutralisant associatif ainsi que par le même dispersant neutralisé par de la soude. Dans un récipient en plastique (seau polypropylène de 1 kg) on mélange 130,74 g d'eau déminéralisée, 0,74 g d'un agent anti-mousse Sellig S4^{®} commercialisé par la société CECA, 8,52 g de la préparation de dispersant neutralisé à l'UDETA. A l'aide d'un mélangeur commercialisé par RAYNERI à turbine, on amorce l'agitation à une vitesse de 300 tours/minute et on ajoute lentement 60 g de pigment bleu Irgalite PG^{®} commercialisé par la société CIBA. Pendant l'ajout du pigment, l'agitation est progressivement augmentée jusqu'à 800 tours/minutes, vitesse finale au moment de l'ajout de la totalité du pigment. L'agitation est laissée pendant 15 minutes, et ensuite, le concentré pigmentaire est laissé au repos. De manière analogue on prépare un concentré avec 128,43 g d'eau déminéralisée, 0,74 g de Sellig S4^{®}, 10, 83 g de la préparation de dispersant neutralisé à l'UDETA, et 60 g de pigment bleu Irgalite PG^{®}.

Les concentrés pigmentaires sont observés après un temps minimum de 24 heures après la mise au repos. Après 24 heures, le concentré du dispersant avec l'UDETA présente l'aspect d'un yaourt et il est facilement redispersable par reprise d'une agitation modérée, y compris celle obtenue à la main à l'aide d'une spatule. Le concentré neutralisé à la soude présente un dépôt important au fond du seau plus difficilement dispersable.

## Revendications

1. Utilisation, comme agent de neutralisation et/ou comme modifiant rhéologique dans une formulation pour peinture, d'au moins un composé choisi parmi la 1-(2-aminoéthyl)-imidazolidin-2-one (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole (3-ATA) et le 4-amino-1,2,4-triazole (4-ATA) et leurs mélanges, à une teneur comprise entre 0,05 et 5% en poids, de façon préférée entre 0,05 et 2% en poids, par rapport au poids total de la formulation.

2. Utilisation selon la revendication 1 **caractérisée en ce que** la teneur du composé est comprise entre 0,1 et 0,5% en poids, de préférence entre 0,1 et 0,3% en poids, par rapport au poids total de la formulation.

3. Utilisation selon la revendication 1 ou la revendication 2 **caractérisée en ce que** le composé est la 1-(2-aminoéthyl)-imidazolidin-2-one (UDETA).

4. Utilisation selon l'une quelconque des revendications précédentes, dans laquelle le composé présente une, de préférence deux, et de préférence encore toutes les caractéristiques suivantes :
• pKa (constante de dissociation de l'amine protonée mesurée à 25°C) égal ou supérieur à 8,5, de préférence égal ou supérieur à 9, ne dépassant pas 12, de préférence ne dépassant pas11 ;
• soluble en proportions allant de 10 g à 1000 g d'amine, de préférence de 10 g à 500 g d'amine, de préférence encore de 10 g à 100 g d'amine, pour 100 g de solvant polaire, de préférence l'eau et/ou les alcools. ;
• point d'ébullition supérieur à 250°C, de préférence supérieur à 300°C, de préférence encore supérieur à 320°C, sous pression atmosphérique.

5. Utilisation selon l'une quelconque des revendications précédentes, dans laquelle la formulation pour peinture est une peinture pigmentée aqueuse ou solvantée.

6. Utilisation selon l'une des revendications précédentes, dans laquelle la formulation pour peinture est une peinture pigmentée, le ou les pigments étant introduits dans la formulation par dilution d'un concentré pigmentaire dans une base de peinture blanche, ledit concentré pigmentaire contenant en outre un dispersant primaire, de l'eau et les additifs et adjuvants usuels.

7. Utilisation selon l'une quelconque des revendications précédentes, en outre comme agent épaississant.

8. Utilisation selon l'une quelconque des revendications précédentes en outre comme agent co-dispersant.

9. Formulation pour peinture, notamment pour peinture aqueuse ou solvantée et/ou concentré pigmentaire, comprenant au moins un composé choisi parmi la 1-(2-aminoéthyl)-imidazolidin-2-one (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole (3-ATA) et le 4-amino-1,2,4-triazole (4-ATA) et leurs mélanges.

10. Formulation pour peinture selon la revendication 9 comprenant de la 1-(2-aminoéthyl)-imidazolidin-2-one (UDETA).

11. Formulation pour peinture selon la revendication 9 ou 10, dans laquelle la quantité de composé est comprise entre 0,05 et 5% en poids, de façon préférée entre 0,05 et 2% en poids, plus préférentiellement entre 0,1 et 0,5% en poids, de préférence encore entre 0,1 et 0,3% en poids, par rapport au poids total de la formulation.

12. Formulation pour peinture selon l'une quelconque des revendications 9 à 11 qui est une base blanche, un concentré pigmentaire ou une peinture teintée.

## Patentansprüche

1. Verwendung mindestens einer aus 1-(2-Aminoethyl)imidazolidin-2-on (UDETA), 1-(2-[(2-Aminoethyl)amino]ethyl)imidazolidon (UTETA), 1-(2-{2-[(2-Aminoethylamino]ethyl}amino)ethyl]imidazo-lidon (UTEPA), N-(6-Aminohexyl)-N'-(6-methyl-4-oxo-1,4-dihydropyrimidin-2-yl)harnstoff (UPy), 3-Amino-1,2,4-triazol (3-ATA) und 4-Amino-1,2,4-triazol (4-ATA) und Mischungen davon ausgewählten Verbindung als Neutralisationsmittel und/oder Rheologiemodifikator in einer Formulierung für Lack in einem Gehalt zwischen 0,05 und 5 Gew.-%, vorzugsweise zwischen 0,05 und 2 Gew.-%, bezogen auf das Gesamtgewicht der Formulierung.

2. Verwendung nach Anspruch 1, **dadurch gekennzeichnet, dass** der Gehalt der Verbindung zwischen 0,1 und 0,5 Gew.-%, vorzugsweise zwischen 0,1 und 0,3 Gew.-%, bezogen auf das Gesamtgewicht der Formulierung, liegt.

3. Verwendung nach Anspruch 1 oder Anspruch 2, **dadurch gekennzeichnet, dass** es sich bei der Verbindung um 1-(2-Aminoethyl)imidazolidin-2-on (UDETA) handelt.

4. Verwendung nach einem der vorhergehenden Ansprüche, wobei die Verbindung eine, vorzugsweise zwei und noch weiter bevorzugt alle der folgenden Eigenschaften aufweist:
• pKa (bei 25°C gemessene Dissoziationskonstante des protonierten Amins) größer gleich 8,5, vorzugsweise größer gleich 9, nicht größer als 12, vorzugsweise nicht größer als 11;
• löslich in Anteilen im Bereich von 10 g bis 1000 g Amin, vorzugsweise 10 g bis 500 g Amin, noch weiter bevorzugt 10 g bis 100 g Amin, pro 100 g polares Lösungsmittel, vorzugsweise Wasser und/oder Alkohole;
• Siedepunkt über 250°C, vorzugsweise über 300°C, noch weiter bevorzugt über 320°C, unter Normaldruck.

5. Verwendung nach einem der vorhergehenden Ansprüche, wobei es sich bei der Formulierung für Lack um einen wässrigen oder lösungsmittelhaltigen pigmentierten Lack handelt.

6. Verwendung nach einem der vorhergehenden Ansprüche, wobei es sich bei der Formulierung für Lack um einen pigmentierten Lack handelt, wobei das Pigment bzw. die Pigmente durch Verdünnen eines Pigmentkonzentrats in einer weißen Lackbasis in die Formulierung eingetragen wird bzw. werden, wobei das Pigmentkonzentrat außerdem ein primäres Dispergiermittel, Wasser und übliche Additive und Adjuvantien enthält.

7. Verwendung nach einem der vorhergehenden Ansprüche, außerdem als Verdickungsmittel.

8. Verwendung nach einem der vorhergehenden Ansprüche, außerdem als Codispergiermittel.

9. Formulierung für Lack, insbesondere wässrigen oder lösungsmittelhaltigen Lack und/oder Pigmentkonzentrat, umfassend mindestens eine aus 1-(2-Aminoethyl)imidazolidin-2-on (UDETA), 1-(2-[(2-Aminoethyl)amino]ethyl)imidazolidon (UTETA), 1-(2-{2-[(2-Aminoethylamino]ethyl}amino)ethyl]imidazo-lidon (UTEPA), N-(6-Aminohexyl)-N'-(6-methyl-4-oxo-1,4-dihydropyrimidin-2-yl)harnstoff (UPy), 3-Amino-1,2,4-triazol (3-ATA) und 4-Amino-1,2,4-triazol (4-ATA) und Mischungen davon ausgewählte Verbindung.

10. Formulierung für Lack nach Anspruch 9, umfassend 1-(2-Aminoethyl)imidazolidin-2-on (UDETA).

11. Formulierung für Lack nach Anspruch 9 oder 10, wobei die Verbindungsmenge zwischen 0,05 und 5 Gew.-%, vorzugsweise zwischen 0,05 und 2 Gew.-%, weiter bevorzugt zwischen 0,1 und 0,5 Gew.-%, noch weiter bevorzugt zwischen 0,1 und 0,3 Gew.-%, bezogen auf das Gesamtgewicht der Formulierung, liegt.

12. Formulierung für Lack nach einem der Ansprüche 9 bis 11, bei der es sich um eine weiße Basis, ein Pigmentkonzentrat oder einen getönten Lack handelt.

## Claims

1. Use, as neutralizing agent and/or as rheology modifier in a paint formulation, of at least one compound chosen from 1-(2-aminoethyl)imidazolidin-2-one (UDETA), 1-(2-[(2-aminoethyl)amino]ethyl)-imidazolidone (UTETA), 1-(2-{2-[(2-aminoethylamino]ethyl}amino)ethyl]imidazolidone (UTEPA), N-(6-aminohexyl)-N'-(6-methyl-4-oxo-1,4-dihydro-pyrimidin-2-yl)urea (UPy), 3-amino-1,2,4-triazole (3-ATA) and 4-amino-1,2,4-triazole (4-ATA) and their mixtures, at a content of between 0.05 and 5% by weight, preferably between 0.05 and 2% by weight, with respect to the total weight of the formulation.

2. Use according to Claim 1, **characterized in that** the content of the compound is between 0.1 and 0.5% by weight, preferably between 0.1 and 0.3% by weight, with respect to the total weight of the formulation.

3. Use according to Claim 1 or Claim 2, **characterized in that** the compound is 1-(2-aminoethyl)-imidazolidin-2-one (UDETA).

4. Use according to any one of the preceding claims, in which the compound exhibits one, preferably two and more preferably all of the following characteristics:
• pKa (dissociation constant of the protonated amine measured at 25°C) equal to or greater than 8.5, preferably equal to or greater than 9, not exceeding 12, preferably not exceeding 11;
• soluble in proportions ranging from 10 g to 1000 g of amine, preferably from 10 g to 500 g of amine, more preferably from 10 g to 100 g of amine, per 100 g of polar solvent, preferably water and/or alcohol;
• boiling point greater than 250°C, preferably greater than 300°C, more preferably greater than 320°C, at atmospheric pressure.

5. Use according to any one of the preceding claims, in which the paint formulation is an aqueous or solvent-based pigmented paint.

6. Use according to one of the preceding claims, in which the paint formulation is a pigmented paint, the pigment or pigments being introduced into the formulation by dilution of a pigment concentrate in a white paint base, the said pigment concentrate additionally containing a primary dispersant, water and the normal additives and adjuvants.

7. Use according to any one of the preceding claims, additionally as thickening agent.

8. Use according to any one of the preceding claims, additionally as codispersant.

9. Paint formulation, in particular for an aqueous or solvent-based paint and/or a pigment concentrate, comprising at least one compound chosen from 1-(2-aminoethyl)imidazolidin-2-one (UDETA), 1-(2-[(2-aminoethyl)amino]ethyl)imidazolidone (UTETA), 1-(2-{2-[(2-aminoethylamino]ethyl}amino)ethyl]-imidazolidone (UTEPA), N-(6-aminohexyl)-N'-(6-methyl-4-oxo-1,4-dihydropyrimidin-2-yl)urea (UPy), 3-amino-1,2,4-triazole (3-ATA) and 4-amino-1,2,4-triazole (4-ATA) and their mixtures.

10. Paint formulation according to Claim 9, comprising 1-(2-aminoethyl)imidazolidin-2-one (UDETA).

11. Paint formulation according to Claim 9 or 10, in which the amount of compound is between 0.05 and 5% by weight, preferably between 0.05 and 2% by weight, more preferentially between 0.1 and 0.5% by weight and more preferably between 0.1 and 0.3% by weight, with respect to the total weight of the formulation.

12. Paint formulation according to any one of Claims 9 to 11, which is a white base, a pigment concentrate or a coloured paint.
